Europäisches Patentamt

European Patent Office

Office européen des brevets

(11) Veröffentlichungsnummer : **0 047 022**
**B1**

(12) **EUROPÄISCHE PATENTSCHRIFT**

(45) Veröffentlichungstag der Patentschrift :
23.05.84

(51) Int. Cl.³ : **B 62 D  33/04**, B 60 P   7/04

(21) Anmeldenummer : **81106906.1**

(22) Anmeldetag : **03.09.81**

(54) **Traggestell für eine Abdeckplane von Nutzfahrzeugen, insbesondere Lastkraftwagen.**

(30) Priorität : **03.09.80 DE 8023483 U**

(43) Veröffentlichungstag der Anmeldung :
**10.03.82 Patentblatt 82/10**

(45) Bekanntmachung des Hinweises auf die Patenterteilung : **23.05.84 Patentblatt 84/21**

(84) Benannte Vertragsstaaten :
**AT CH DE LI NL SE**

(56) Entgegenhaltungen :
**DE-A- 1 959 892**
**DE-U- 7 513 171**
**DE-U- 7 800 399**
**DE-U- 7 911 045**

(73) Patentinhaber : **Hebmüller & Hirsch Fahrzeugbau**
**Friedrich-Engels-Allee 361**
**D-5600 Wupppertal-Barmen (DE)**

(72) Erfinder : **Hirsch, Norbert**
**Emanuel-Felke-Strasse 35**
**D-5600 Wuppertal-Sudberg (DE)**

(74) Vertreter : **Kneissl, Richard, Dr.**
**Widenmayerstrasse 46**
**D-8000 München 22 (DE)**

## Beschreibung

Die Erfindung betrifft ein Traggestell für eine Abdeckplane von Nutzfahrzeugen, insbesondere Lastkraftwagen, bestehend aus am Fahrzeugrahmen befestigbaren Pfosten und an deren oberen Enden angebrachten Trägern, wobei mindestens ein Zwischenpfosten mittels eines an seiner Oberseite befestigten und in einer Führungsschiene am Träger angeordneten Läufers verschiebbar ist.

Ein Traggestell der vorstehend beschriebenen Art ist aus dem DE-Gbm. 79 11 045 bekannt. Bei diesem Traggestell können die zur Abstützung der Träger an der Längsseite des Fahrzeugs erforderlichen Zwischenpfosten, nachdem sie an ihrer Unterseite vom Fahrzeugrahmen gelöst worden sind, seitlich verschoben werden, um das Beladen des Fahrzeugs von der Seite her zu erleichtern. Damit der Zwischenpfosten seitlich verschoben werden kann, muß er einen bestimmten Betrag vom Fahrzeugrahmen weggeschwenkt werden. Dies hat zur Folge, daß der Läufer an der Oberseite des Zwischenpfostens in seiner Führung um einen entsprechenden Winkel gekippt wird. Bei einer besonderen Ausführungsform des in dem erwähnten Gbm. beschriebenen Traggestells ist der Zwischenpfosten mit einer an seiner Unterseite angebrachten Lasche in eine am Fahrzeugrahmen befestigte Tasche eingesteckt. Um den Zwischenpfosten lösen zu können, ist dieser in zwei Teile unterteilt, wobei diese beiden Teile durch ein Knickgelenk gegeneinander abgewinkelt werden können. In der gestreckten Lage kann das Knickgelenk durch einen Bolzen gesichert werden. Bei dieser Ausführungsform tritt natürlich ein noch stärkeres Kippen des Läufers in der Führung auf, wenn der Zwischenpfosten von der Bordwand unter Ausknicken gelöst wird, um ihn seitlich verschieben zu können. Bei der bekannten Ausführungsform muß also der vorzugsweise als Rollenwagen ausgebildete Läufer in der vorzugsweise als Führungsschiene ausgebildeten Führung so locker angeordnet sein, daß das erforderliche Kippen des Läufers in der Führung gestattet wird.

Es hat sich nun aber gezeigt, daß dieser lockere Sitz nicht nur zu einem Ausschlagen der Teile, sondern auch zu einem Verkanten führen kann, so daß beim Verschieben des ausgeschwenkten Zwischenpfostens Schwierigkeiten auftreten können.

Der vorliegenden Erfindung lag deshalb die Aufgabe zugrunde, das bekannte Traggestell so weiterzubilden, daß ein guter Sitz des Läufers in der Führung auch im ausgeschwenkten Zustand des Zwischenpfostens möglich ist, so daß die erwähnten Schwierigkeiten hinsichtlich Ausschlagen und Verkanten vermieden werden.

Diese Aufgabe wird gemäß der Erfindung dadurch gelöst, daß bei einem Traggestell der eingangs bezeichneten Art die Führungsschiene entlang ihrer Längsachse drehbar gelagert ist.

Durch die erfindungsgemäße Ausbildung wird es ermöglicht, daß beim Verdrehen des Läufers während des Ausschwenkens des Zwischenpfostens die Führung sich mitdrehen kann. Dadurch kann der Läufer in der Führung mit nur geringen Toleranzen angeordnet sein. Es wird also gemäß der Erfindung das gesamte Verschiebesystem und nicht nur der Läufer verschwenkt.

Es wird bevorzugt, daß in der Führungsschiene ein als Rollenwagen ausgebildeter Läufer verschiebbar ist. Die Führungsschiene kann durch Scharniere am Träger befestigt sein. Die Führungsschiene kann auch gleichzeitig den Träger bilden, wobei die Führungsschiene mit ihren Enden in beliebiger Weise am übrigen Traggestell um ihre Längsachse drehbar gelagert sein kann. Bevorzugt wird hier jedoch ein Zapfenlager.

Eine Ausführungsform des erfindungsgemäßen Traggestells ist in den beigefügten Zeichnungen dargestellt. In den Zeichnungen zeigen :

Figur 1 eine perspektivische Darstellung eines Lastkraftwagens mit einem erfindungsgemäßen Traggestell für eine Abdeckplane ;

Figur 2 einen verschiebbaren Zwischenpfosten in knickbarer Ausführungsform ;

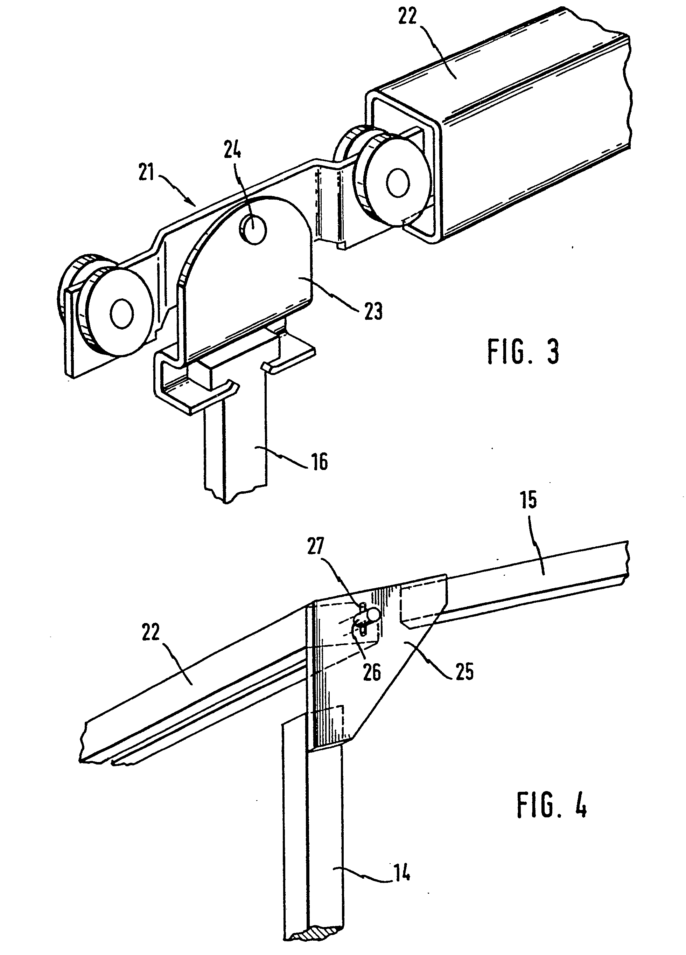

Figur 3 einen Rollenwagen und eine Führungsschiene ; und

Figur 4 eine obere Ecke des Traggestells.

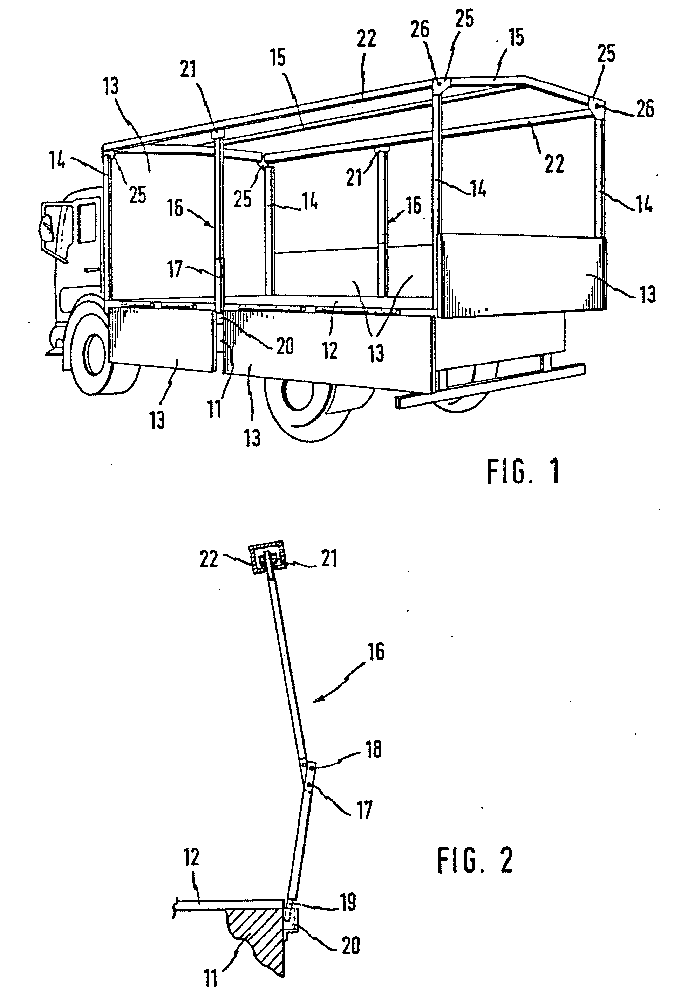

Der in Fig. 1 dargestellte Lastkraftwagen besitzt in seinem Ladebereich einen Rahmen 11, auf dem eine Plattform 12 befestigt ist. Am Rahmen sind in bekannter Weise Bordwände 13 befestigt. Die seitlichen und rückwärtigen Bordwände können abgeklappt werden. An den vier Ecken des Rahmens sind Pfosten 14 angebracht, die zusammen mit Trägern 15 und Führungsschienen 22 ein Traggestell für eine Abdeckplane bilden. An den Längsseiten sind jeweils Zwischenpfosten 16 vorgesehen, die nach dem Lösen vom Rahmen 11 zur Seite verschoben werden können.

Wie insbesondere aus Fig. 2 ersichtlich ist, sind die Zwischenpfosten 16 zweiteilig ausgebildet, wobei die beiden Teile durch ein Knickgelenk 17 miteinander verbunden sind. Durch Einstecken eines (nicht dargestellten) Bolzens in ein entsprechendes Loch 18 im Knickgelenk kann der Zwischenpfosten in seiner gestreckten Lage fixiert werden. An seiner Unterseite besitzt er eine Lasche 19, die in eine entsprechende Tasche 20 am Rahmen 11 einschiebbar ist. An der Oberseite des Zwischenpfostens 16 ist ein Rollenwagen 21 befestigt, der in einer entsprechenden Führungsschiene 22 läuft. Der Zwischenpfosten 16 ist mittels eines Zwischenstücks 23 und einer Schwenkachse 24 schwenkbar aufgehängt. Dies erleichtert das seitliche Verschieben des Zwischenpfostens 16.

Fig. 4 zeigt die drehbare Lagerung der Führungsschiene 22 an einer oberen Ecke des Traggestells. An das obere Ende des Pfostens 14 und an das seitliche Ende des Trägers 15 ist eine Lagerplatte 25 angeschweißt. An der Führungsschiene 22 ist stirnseitig ein Lagerzapfen 26 angebracht, der durch eine entsprechende Öffnung in der Lagerplatte 25 hindurchgeht und an seinem freien Ende mittels eines Bolzens 27 gesichert ist. Der Lagerzapfen kann beispielsweise einen Teil eines (nicht dargestellten) Einsatzes bilden, der satt in der Führungsschiene 22 sitzt und mit dieser verbunden ist.

Wie ersichtlich, dienen die Führungsschienen 22 gleichzeitig als Träger für die Abdeckplane.

Soll bei der dargestellten Ausführungsform der Zwischenpfosten 16 seitlich verschoben werden, so wird der im Loch 18 des Knickgelenks 17 sitzende Sicherungsbolzen herausgezogen, worauf der Zwischenpfosten 16 abgeknickt werden kann. Die an seiner Unterseite angebrachte Lasche 19 wird dabei von der Tasche 20 am Rahmen 11 herausgezogen. Während des Abknickens wird der Rollenwagen 21 verschwenkt und dreht dabei die Führungsschiene 22 um einen entsprechenden Betrag mit. Der Zwischenpfosten kann dann seitlich verschoben werden, um ein bequemes Beladen der Plattform 12 zu ermöglichen.

## Ansprüche

1. Traggestell für eine Abdeckplane von Nutzfahrzeugen, insbesondere Lastkraftwagen, bestehend aus am Fahrzeugrahmen (11) befestigbaren Pfosten (14) und an deren oberen Enden angebrachten Trägern (15), wobei mindestens ein Zwischenpfosten (16) mittels eines an seiner Oberseite befestigten und in einer Führungsschiene (22) am Träger (15) angeordneten Läufers (21) verschiebbar ist, dadurch gekennzeichnet, daß die Führungsschiene (22) um ihre Längsachse drehbar ist.

2. Traggestell nach Anspruch 1, dadurch gekennzeichnet, daß in der Führungsschiene (22) ein als Rollenwagen (21) ausgebildeter Läufer verschiebbar ist.

3. Traggestell nach Anspruch 2, dadurch gekennzeichnet, daß die Führungsschiene (22) durch Scharniere am Träger (15) befestigt ist.

4. Traggestell nach Anspruch 2, dadurch gekennzeichnet, daß die Führungsschiene (22) gleichzeitig den Träger bildet.

5. Traggestell nach Anspruch 4, dadurch gekennzeichnet, daß die Führungsschiene (22) mittels eines Zapfenlagers drehbar gelagert ist.

## Claims

1. Support frame for a tarpaulin or the like of commercial vehicles, in particular lorries or trucks, comprising posts (14) securable to the vehicle chassis (11) and beams (15) disposed at the upper ends of said posts (14), at least one intermediate post (16) being displaceable by means of a runner (21) secured at its upper side and arranged in a guide rail (22) on the beam (15), characterized in that the guide rail (22) is rotatable about its longitudinal axis.

2. Support frame according to claim 1, characterized in that in the guide rail (22) a runner constructed as roller carriage (21) is displaceable.

3. Support frame according to claim 2, characterized in that the guide rail (22) is secured by hinges to the beam (15).

4. Support frame according to claim 2, characterized in that the guide rail (22) forms at the same time the beam.

5. Support frame according to claim 4, characterized in that the guide rail (22) is rotatably mounted by means of a pivot bearing.

## Revendications

1. Cadre porteur pour une bâche de véhicule utilitaire, en particulier de camion, composé de montants (14) fixés au châssis (11) du véhicule et de poutrelles (15) disposées aux extrémités supérieures des montants, au moins un montant intermédiaire (16) étant déplaçable au moyen d'un coulisseau (21) fixé à sa partie supérieure et disposé dans une glissière (22) placée sur la poutrelle (15), caractérisé en ce que la glissière (22) peut tourner autour de son axe longitudinal.

2. Cadre porteur suivant la revendication 1, caractérisé en ce qu'un coulisseau, exécuté sous forme de chariot à galets (21), est déplaçable dans la glissière (22).

3. Cadre porteur suivant la revendication 2, caractérisé en ce que la glissière (22) est fixée à la poutrelle (15) par des charnières.

4. Cadre porteur suivant la revendication 2, caractérisé en ce que la glissière (22) forme en même temps la poutrelle.

5. Cadre porteur suivant la revendication 4, caractérisé en ce que la glissière (22) est logée rotative au moyen d'un palier à tourillon.

FIG. 1

FIG. 2

FIG. 3

FIG. 4